# FASCICULE DE BREVET EUROPEEN

(11) **EP 0 606 608 B1**
(45) Date de publication et mention de la délivrance du brevet: **25.02.1998**
(21) Numéro de dépôt: 93120357.4
(22) Date de dépôt: 17.12.1993
(51) Int. Cl.: C21B 7/00, C21B 5/02, B01D 46/48

(54) **Procédé pour l évacuation de résidus solides d'une installation d'épuration de gaz**
Verfahren zum Evakuieren von festen Abfällen aus einer Gasreinigungsvorrichtung
Process for the evacuation of solid residu from a gaspurification installation.

(30) Priorité: 13.01.1993 LU 88210; 03.11.1993 LU 88421
(43) Date de publication de la demande: 20.07.1994
(73) Titulaire: PAUL WURTH S.A., 1122 Luxembourg (LU)
(72) Inventeur: Schmit, Louis, L-1451 Luxembourg (LU)
(74) Mandataire: Freylinger, Ernest T.

(56) Documents cités:
- EP-A- 0 101 098
- DE-A- 3 315 067
- DE-B- 1 137 056
- FR-A- 1 123 433
- FR-A- 2 375 562
- GB-A- 2 088 244
- US-A- 3 879 179

## Description

La présente invention concerne un procédé pour l'évacuation de résidus solides, granuleux ou pulvérulents, d'une installation d'épuration de gaz, notamment de gaz de haut-fourneau.

On connaît des installations d'épuration de gaz, notamment de gaz de haut-fourneau, dans lesquels les polluants solides, granuleux ou pulvérulents, sont séparés de la phase gazeuse à l'aide de séparateurs secs comme par exemple des sacs à poussière, des cyclones, des filtres à manches et des électrofiltres. Ces résidus solides sont collectés dans des trémies installées directement en-dessous des séparateurs secs.

Jusqu'à présent, ces trémies, qui doivent être vidangées régulièrement, déchargent librement les résidus solides, soit directement dans des wagons ou bacs de camions, soit simplement sur un tas en-dessous des trémies pour être chargés ensuite par des pelles mécaniques sur des wagons ou camions. Les camions évacuent ensuite les résidus solides vers une aire de stockage intermédiaire. On notera que les résidus solides séparés des gaz de haut-fourneau sont principalement constitués de poussières de fer et de coke qui, dans certaines conditions, peuvent être avantageusement recyclées dans une installation d'agglomération ou être réinjectées directement dans le haut fourneau.

L'opération d'évacuation des résidus solides des trémies de filtres est, dans l'état actuel de la technique, essentiellement une opération de manutention en discontinu qui présente des désavantages majeurs. D'abord, le déversement libre de résidus solides pulvérulents est une opération très poussiéreuse, ce qui entraîne incontestablement des problèmes du point-de-vue salubrité du lieu de travail et protection de l'environnement. Ensuite le déversement à l'air libre des résidus solides libère aussi de façon incontrôlée des gaz et des vapeurs toxiques qui sont entraînés par les résidus solides endehors de l'installation d'épuration de gaz lors de la décharge de la trémies. Ces gaz et vapeurs libérés de façon incontrôlée représentent incontestablement un problème de sécurité non-négligeable. Enfin, les résidus solides doivent être chargés par des pelles mécaniques sur des wagons ou des camions qui les transportent sur une aire de stockage intermédiaire pour, le cas échéant, être soumis à une opération de manutention additionnelle avant recyclage. Il est évident que cette manutention discontinue des résidus solides est une pratique peu salubre, polluante et coûteuse. De plus, le mode d'évacuation décrit plus haut a le désavantage qu'on ne sait pas valoriser, dans une opération de recyclage, l'énergie calorifique sensible encore contenue dans les résidus solides à la sortie de l'installation d'épuration de gaz.

On pourrait naturellement songer à utiliser des systèmes de transport en continu de produits granuleux ou pulvérulents connus en soi, notamment des convoyeurs mécaniques ouverts (par exemple des bandes transporteuses), des convoyeurs mécaniques intégrés dans des conduits fermés (par exemple des vis d'Archimède) et des convoyeurs pneumatiques. A priori, les systèmes susmentionnés semblent cependant créer plus de problèmes qu'ils n'en résolvent. Les convoyeurs ouverts n'éliminent en aucune façon les problèmes de pollution, de salubrité et de sécurité liés aux poussières, gaz et vapeurs libérés lors de la manutention des résidus solides. Les convoyeurs mécaniques intégrés dans des conduits fermés pourraient, en tant que systèmes étanches, résoudre le problème de libération de poussières, de gaz et de vapeurs mais, pour des raisons de coûts, il n'est cependant guère envisageable d'utiliser de tels systèmes sur des distances plus importantes. Pour ce qui est des convoyeurs pneumatiques, ils manquent de fiabilité, car ils risquent de boucher lorsque les résidus solides sont humides, ce qui entraîne d'importants travaux de nettoyage avant qu'on puisse de nouveau les redémarrer. Or, dans le cas des gaz de haut-fourneau il faut prévoir, à l'intérieur de l'installation d'épuration des gaz, pour certains régimes de fonctionnement du haut-fourneau, une condensation partielle de la vapeur d'eau contenue dans les gaz, ce qui entraîne naturellement une humidification des résidus solides collectés dans la trémie du filtre. Cette humidification des résidus solides peut aussi être due à une opération de réglage de la température des gaz de haut-fourneau en amont du filtre, qui est réalisée par une injection d'eau. Il faut de plus considérer que tout système de transport par convoyeur mécanique fermé ou par convoyeur pneumatique présentera des risques sérieux d'explosion si les gaz entraînées par les résidus solides comprennent des gaz combustibles.

Un autre facteur dont il faudra tenir compte est le caractère abrasif des poussières de haut fourneau. Il s'agit en effet de poussières à granulométrie relativement grosse (de l'ordre du millimètre) et qui sont composées de grains à dureté élevée.

Le document US-A-3,879,179 décrit un procédé pour l'évacuation de résidus pulvérulents d'une installation d'épuration de gaz, dans lequel les résidus sont déchargés à travers une première conduite dans un récipient fermé où ils sont mélangés avec de l'eau pour former une boue liquide. Après que le récipient est rempli, la première conduite est fermée et la boue liquide est évacuée du récipient à travers une deuxième conduite.

L'objet de la présente invention est de proposer pour l'évacuation de résidus solides, granuleux ou pulvérulents, d'une installation d'épuration de gaz, notamment de gaz de haut-fourneau, un procédé fiable d'évacuation en continu de ces résidus solides qui permet de contrôler les risques du point de vue sécurité, salubrité et pollution et dont le fonctionnement n'est pas mis en question lorsque les résidus solides à évacuer sont humides.

Selon la présente invention cet objectif est atteint par un procédé, dans lequel un lot de résidus solides est déchargé de l'installation d'épuration de gaz à travers une conduite de décharge dans au moins un premier vase clos, et lorsque l'opération de déchargement est terminée, ledit premier vase clos est isolé par rapport à l'installation d'épuration de gaz par fermeture étanche de la conduite de décharge, caractérisé par
un passage d'au moins un gaz de purge sous pression à travers lesdits résidus solides contenus dans ce premier vase clos, de façon à créer un lit statique, respectivement fluidisé, desdits résidus solides dans ce premier vase clos,
une évacuation contrôlée de ce (ces) gaz de purge en dehors dudit premier vase clos, et finalement
une évacuation progressive des résidus solides en dehors dudit premier vase clos dans une conduite de transport, suivie d'un transport des résidus solides à travers cette conduite de transport en suspension dans un gaz sous pression.

Selon le procédé proposé lesdits résidus solides à évacuer de l'installation d'épuration de gaz sont d'abord déchargés dans un premier vase clos. Ce premier vase clos est alors isolé par rapport à l'installation d'épuration de gaz et on insuffle un gaz de purge sous pression dans lesdits résidus solides afin de créer dans ledit premier vase clos un lit statique ou fluidisé desdits résidus solides. De cette façon les gaz et vapeurs emprisonnés entre les particules solides sont libérés et se mélangent avec le gaz de purge. Ce dernier est alors évacué de façon contrôlée ensemble avec les gaz et vapeurs en-dehors dudit premier vase clos.

Il sera noté que les particules en suspension dans le lit statique ou fluidisé offrent une très grande surface de contact au gaz de purge. De cette façon il est possible de réaliser, le cas échéant, un transfert optimal d'énergie calorifique du milieu gazeux vers les résidus solides. Cet échange thermique fournit la chaleur latente nécessaire à l'évaporation de substances volatiles, telle que l'eau, qui imprègnent les résidus solides. Le procédé proposé permet par conséquent de réaliser de façon efficace non seulement une élimination contrôlée des substances gazeuses entraînés par les résidus solides, mais également un assèchement des résidus solides humides et une élimination contrôlée des vapeurs ainsi produites.

A l'issue de l'opération de purge on se trouve en présence de résidus solides idéalement préparés pour être transportés par un convoyeur pneumatique en suspension dans un deuxième gaz sous pression. En effet, les résidus solides sont séparés de tous les gaz toxiques et/ou explosifs éventuellement entraînés par les résidus solides en-dehors de l'installation d'épuration de gaz lors de leur décharge de cette dernière. De plus, les résidus solides ont été, le cas échéant, efficacement séchés dans le lit statique ou fluidisé et ne présentent plus de risque de s'agglutiner en état humide. Enfin, les particules solides, granuleux ou pulvérulents, ne forment plus une masse compacte, mais sont déjà au moins partiellement en suspension dans un gaz.

Pour ce qui concerne les gaz et vapeurs toxiques, explosifs et/ou polluants, séparés desdits résidus solides et dilués dans un gaz de purge adéquat, ils peuvent être évacués de façon contrôlée en dehors de ladite première enceinte, soit vers un endroit où ils peuvent être relâchés sans risque pour l'homme et/ou pour l'environnement, soit vers une installation de post-traitement de ces mélanges gazeux.

Avec le gaz de purge on crée avantageusement, lors de la purge, une surpression dans ledit premier vase clos. En effet, pour un même débit massique du gaz de purge, plus cette surpression est élevée, moins la vitesse du gaz dans le lit fluidisé est élevée, plus la fluidisation obtenue est homogène et moins le risque d'entraînement de particules solides est élevé. Ou en d'autres termes, pour une vitesse limite imposée du gaz de purge dans le lit fluidisé, l'augmentation de la pression dans le premier vase clos permet d'augmenter le débit massique du gaz de purge. On notera que cette surpression dans ledit premier vase clos peut atteindre quelques bar.

Le premier gaz de purge insufflé dans lesdits résidus solides est avantageusement un gaz inerte. De cette façon on élimine efficacement tout risque d'explosion dès le début du procédé.

Si les résidus solides sont humides, ce qui pourrait entraîner une agglutination des particules solides lors du transport pneumatique, le gaz de purge est avantageusement un gaz réchauffé, ayant une humidité relative très faible, p.ex. de l'air séché et réchauffé.

Le débit du gaz de purge est de préférence maintenu constant afin de pouvoir maintenir constant le temps de purge.

Le gaz de purge est avantageusement évacué à travers des séparateurs retenant les particules solides. Il pourrait cependant aussi être réinjecté dans ladite installation d'épuration de gaz en amont du séparateur de particules solides de cette dernière.

Si on veut obtenir un fonctionnement en continu du convoyeur pneumatique, sans interruption lors des opérations de chargement et de purge dudit premier vase clos, on peut par exemple travailler avec un deuxième vase clos installé en aval dudit premier vase clos. Dans ce cas les résidus solides sont déchargés, après le passage du ou des gaz de purge, dans ledit deuxième vase clos où ils sont au moins partiellement maintenus en suspension dans un gaz sous pression, pour être évacués par transport pneumatique à partir de ce deuxième vase clos, qui constitue une sorte de réservoir tampon du convoyeur pneumatique.

Alternativement on peut aussi prévoir un deuxième vase clos identique au premier et installé en parallèle avec celui-ci. Le deuxième vase clos est chargé et les résidus solides sont purgés et/ou séchés, lorsque dans le deuxième vase clos les résidus solides sont évacués par transport pneumatique et vice-versa.

On notera qu'un fonctionnement en continu du convoyeur pneumatique peut être intéressant du point de vue optimisation de l'énergie de transport pneumatique et du point de vue de l'utilisation finale des résidus solides.

La présente invention propose aussi un dispositif pour l'évacuation de résidus solides, granuleux ou pulvérulents, d'une installation d'épuration de gaz, notamment de gaz de haut-fourneau, caractérisé par un premier vase clos formant un récipient de pression, une conduite de chargement connectée entre ladite installation d'épuration de gaz et ledit premier vase clos, un organe d'isolement étanche aux gaz intégré dans ladite conduite de chargement, une surface de fluidisation agencée dans ledit premier vase clos de façon à pouvoir insuffler un gaz à travers lesdits résidus solides du bas vers le haut, au moins une source d'alimentation en gaz connectée à ladite surface d'insufflation et dimensionnée pour délivrer un gaz avec un débit et une pression suffisante pour créer et entretenir un lit statique, respectivement un lit fluidisé, desdits résidus solides au-dessus de ladite surface d'insufflation, une conduite d'évacuation de gaz raccordée audit vase clos et muni d'un organe d'isolement, une conduite d'évacuation des résidus solides connectée audit vase clos et munie d'un organe d'isolement, un convoyeur pneumatique connecté de façon étanche à ladite conduite d'évacuation des résidus solides.

Il sera noté que la surpression dans ledit premier vase clos est avantageusement maintenue constante à l'aide de deux tuyères de Laval, dont l'une est placée entre la surface de fluidisation et la source d'alimentation en gaz, et l'autre est intégrée dans la conduite d'évacuation de gaz.

Le dispositif utilisé pour la mise en oeuvre du procédé proposé est soumis à une usure intense par les résidus solides, granuleux ou pulvérulents, qui sont évacués de l'installation d'épuration de gaz. Dans de nombreux cas, notamment dans le cas de gaz de haut fourneau où ces résidus solides comprennent des poussières de minerai de fer et de coke d'une granulométrie relativement grosse (de l'ordre du millimètre), ces résidus sont en effet très abrasifs et produisent, lorsqu'ils sont déplacés à des vitesse élevées, des phénomènes d'abrasion très importants dans le dispositif utilisé pour la mise en oeuvre du procédé proposé.

Dans le but de réduire l'usure au niveau de la conduite de décharge entre l'installation d'épuration de gaz et ledit premier vase clos, il est proposé de prévoir dans le cadre du procédé décrit ci-dessus, avant de commencer le déchargement du lot de résidus solides dans ledit premier vase clos et pendant son déchargement proprement dit, un réglage de la pression régnant dans ledit premier vase clos, de façon à limiter la différence de pression entre l'installation d'épuration de gaz et ledit premier vase clos.

Cette limitation de la différence de pression entre l'installation d'épuration de gaz et ledit premier vase clos permet de limiter la vitesse d'écoulement des résidus solides dans la conduite de décharge même et en aval de celle-ci, ce qui réduit naturellement les phénomènes d'abrasion dans ces zones.

Dans ce contexte il convient de remarquer que l'installation d'épuration de gaz est normalement en surpression importante par rapport à l'atmosphère, alors que ledit premier vase clos est, avant le déchargement du lot de résidus solides, normalement sous pression atmosphérique. Le réglage de la pression régnant dans ledit premier vase clos comprend dans ce cas avantageusement:
a) avant de commencer le déchargement du lot de résidus solides dans ledit premier vase clos, une injection contrôlée d'un gaz sous pression dans ledit premier vase clos pour établir dans celui-ci une pression sensiblement égale à la pression régnant dans l'installation d'épuration de gaz;
b) pendant l'opération de déchargement proprement dite, une décompression contrôlée dudit premier vase clos par une évacuation contrôlée d'un débit de gaz en-dehors de celui-ci, de façon à maintenir dans ledit premier vase clos une pression légèrement inférieure à la pression régnant dans l'installation d'épuration de gaz.

Pendant l'opération de déchargement proprement dite on mesure avantageusement le débit des résidus s'écoulant dans ledit vase clos et on compare le débit mesuré à une valeur limite supérieure. Le réglage de la pression dans ledit premier vase clos est alors avantageusement réalisé en fonction du débit mesuré des résidus solides, de façon que la pression dans ledit premier vase clos soit augmentée si ce débit mesuré dépasse la valeur limite supérieure.

Dans le but de réduire l'usure au niveau du convoyeur pneumatique et de son dispositif d'alimentation, il est proposé de prévoir dans le procédé décrit plus haut:
a) lors de l'évacuation progressive du lot de résidus solides en-dehors dudit premier vase clos dans ladite conduite de transport, une détection d'un niveau de remplissage minimal dudit premier vase clos;
b) si ce niveau de remplissage minimal est détecté, une interruption de l'évacuation du lot de résidus solides en-dehors dudit premier vase clos et un isolement étanche de ladite conduite de transport par rapport audit premier vase clos; et
c) un réglage de la pression dans la partie amont de ladite conduite de transport par injection d'un gaz sous pression, de façon à suivre une courbe de pression décroissante dans le temps lors d'une évacuation progressive des résidus solides endehors de ladite conduite de transport en suspension dans le gaz sous pression.

La détection d'un niveau minimal de remplissage dudit premier vase clos permet d'éviter la création d'un court-circuit des gaz à travers la masse des résidus solides. L'isolement de la conduite de transport par rapport audit premier vase clos évite efficacement que le volume important de gaz sous pression contenu dans ledit premier vase clos ne puisse influencer la vitesse de vidange de la conduite de transport. Ladite courbe de pression décroissante est alors avantageusement déterminée de façon que la vitesse des résidus solides dans la conduite de transport, qui aurait tendance à augmenter lors de l'opération de vidange ne dépasse pas une vitesse limite.

Il sera apprécié que cette façon de procéder permet de vider complètement ladite conduite de transport, sans pour autant atteindre vers la fin de cette opération de vidange des vitesses trop élevées qui entraîneraient inévitablement une destruction rapide de ladite conduite de transport par des phénomènes d'abrasion. L'opération de vidange de la conduite de transport selon le procédé décrit ci-dessus, se fait avantageusement pendant l'opération de décompression dudit premier vase clos et/ou pendant l'opération de déchargement du lot suivant de résidus solides de l'installation d'épuration de gaz dans ledit premier vase clos et/ou pendant l'opération de purge de ce lot de résidus solides dans ledit premier vase clos. En opérant de cette façon, il est possible de commencer l'opération d'évacuation des résidus solides en-dehors du premier vase clos dans une conduite de transport entièrement vide et d'éviter ainsi des bourrages de cette dernière.

Des exemples préférentiels de réalisation du procédé et du dispositif proposé sont décrits, à titre d'exemple uniquement, en se basant sur les figures en annexe, dans lesquels:
- la Figure 1 est un schéma de principe d'une installation permettant la mise en oeuvre du procédé proposé;
- la Figure 2 est une première variante d'exécution;
- la Figure 3 est une deuxième variante d'exécution;
- la Figure 4 est un schéma de principe d'une installation, semblable à celle de la Figure 1, équipée de systèmes de régulation supplémentaires;
- la Figure 5 représente de façon schématique dans deux diagrammes l'évolution de la pression dans une conduite de transport pneumatique lors de l'opération de vidange de celle-ci.

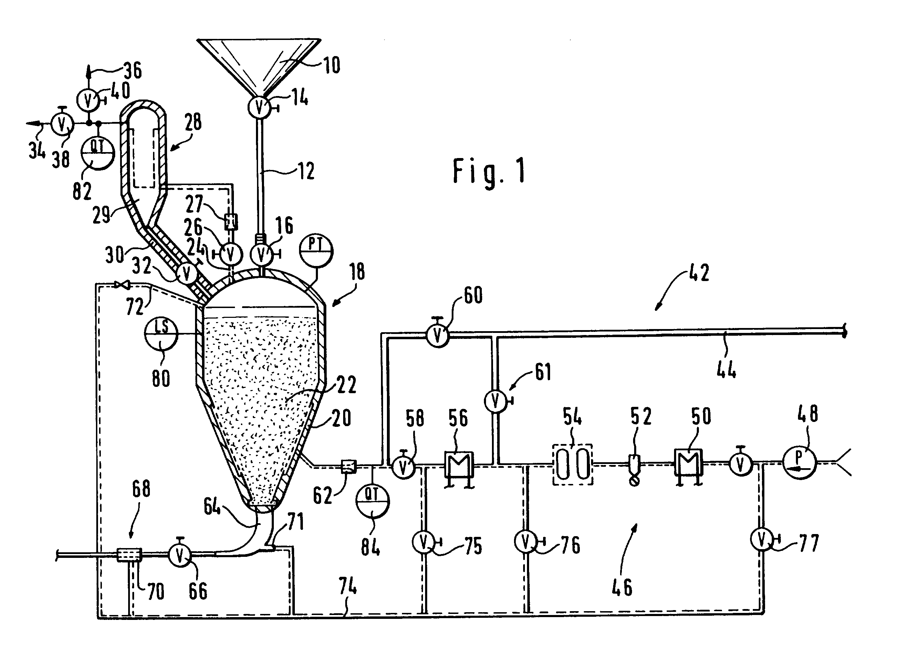

Sur la Figure 1 la référence 10 repère une trémie installée en-dessous d'un séparateur de particules solides (non montré) d'une installation d'épuration de gaz de haut-fourneau. Cette trémie 10 reçoit les résidus solides séparés par le séparateur du gaz de haut-fourneau. On notera que ces gaz de haut-fourneau comprennent des gaz toxiques comme le CO, le SO₂ et des quantités plus ou moins importantes de vapeur d'eau. Les résidus solides sont principalement constitués de poussières de coke, de charbon et de minerais de fer et constituent par conséquent une matière première normalement recyclable dans une installation d'agglomération ou directement réinjectable dans le haut fourneau.

Une conduite de décharge 12, équipée en amont d'un organe d'obturation 14 pour les résidus solides et en aval d'une vanne d'isolement 16 étanche aux gaz, relie la trémie 10 à un vase clos 18. Le vase clos 18 constitue un récipient de pression isolé thermiquement, dans lequel la conduite de décharge 12 débouche à sa partie supérieure. A sa partie inférieure le vase 18 est équipé d'un dispositif de fluidisation 20 permettant d'insuffler un gaz par endessous, à travers les résidus solides déchargés dans le vase clos. Le dispositif de fluidisation 22 est par exemple constitué d'une surface périphérique perméable aux gaz et délimitant sur la partie inférieure du vase 18 l'espace de stockage des résidus solides. Sur la Figure 1 cette surface périphérique perméable 22 definit la plus grande partie d'un cône de déversement du vase 18.

A partir de la partie supérieure du vase clos part une conduite de purge ou de décompression 24, qui est munie d'une vanne d'isolement 26 étanche au gaz. Cette conduite de purge 24 est avantageusement connectée à un séparateur de particules solides, par exemple un filtre à sacs 28. Une trémie 29, connectée en-dessous du filtre 28, se décharge à travers une conduite de décharge 30, qui est munie d'une vanne d'isolement 32 étanche au gaz, dans le vase 18. Les gaz de purge filtrés par le filtre 28 sont évacués à travers des conduites d'évacuation 34, 36, munies chacune d'une vanne d'isolement 38, 40 étanches au gaz. Une tuyère de Laval 27, intégrée dans la conduite de purge 24 permet d'effectuer ces opérations de purge et de séchage à des pressions élevées, donc d'augmenter le débit massique du gaz de purge sans entraîner les solides.

Une source d'alimentation en gaz est repérée globalement par la référence 42. Dans le cas représenté sur la Figure 1, cette source d'alimentation comprend une conduite d'alimentation 44 d'un gaz inerte, par exemple de l'azote et une installation pour générer de l'air sec, repérée globalement par la référence 46. Ce générateur d'air 46 comprend par exemple un compresseur d'air 48, un refroidisseur d'air 50, suivis d'un séparateur d'eau 52, éventuellement d'un sécheur d'air additionnel 54 pour un post-séchage de l'air et d'un réchauffeur d'air 56. Le générateur d'air 46 permet par conséquent de créer un débit d'air pressurisé dont l'humidité relative est très faible.

A travers les vannes d'isolement 58 et 60 on sait connecter, soit la conduite de gaz inerte 44, soit le générateur d'air 46, au dispositif de fluidisation 20. L'alimentation en gaz du dispositif de fluidisation 20 se fait de préférence par un flux supersonique à travers une tuyère de Laval 62, ce qui permet de fixer le débit de gaz à une valeur déterminée.

L'extrémité inférieure du vase 18 débouche dans un dispositif d'évacuation des résidus solides, de préférence un dispositif d'évacuation par fluidisation, par exemple un coude de fluidisation 64. Ce dispositif d'évacuation débouche à travers une vanne d'isolement 66 dans une conduite de transport pneumatique 68. Le coude de fluidisation 64, la partie supérieure du vase 18, ainsi qu'une station de post-fluidisation 70 sont alimentés en gaz par une conduite 74 raccordée à la source d'alimentation en gaz 42.

Le fonctionnement du dispositif décrit dans ce qui précède peut être résumé comme suit:

La conduite de décharge 12 permet, en ouvrant la vanne d'isolement 16 puis l'organe d'obturation 14, de décharger par gravité lesdits résidus solides de la trémies 10 dans le vase clos 18. Lorsque le vase clos est rempli jusqu'à une certaine hauteur, ce qui est détecté par un détecteur de niveau 80, l'organe d'obturation 14, qui est fermé en premier lieu, interrompant le flux de décharge.Ensuite en ferme la vanne d'isolement étanche au gaz 16. Lors du chargement du vase 18 au moins une des vannes de purge 36 et 38 et la vanne d'isolement 26 sont ouvertes afin de permettre une décompression du vase 18 lors de son chargement.

Ensuite la vanne 60 est ouverte afin d'alimenter le dispositif de fluidisation 20 avec un débit constant d'un gaz inerte. Ce débit de gaz est insufflé par en-dessous à travers les résidus solides pour créer un lit statique ou lit fluidisé de particules solides. Reste à noter que la fluidisation obtenue dans le vase 18 ne sera pas nécessairement homogène, ce qui est cependant sans désavantage majeur. Ce qui importe est qu'il subsiste le moins possible de blocs compacts de résidus solides qui ne sont pas traversés par le gaz inerte.

Le gaz inerte, entraînant les gaz et vapeurs contenus dans le vase 18 et emprisonnés dans les résidus solides, est évacué à travers la conduite 24, et le filtre 28 dans une des conduites de purge 34 ou 36. Dans le filtre 28 le mélange de gaz est séparé des particules solides entraînées. Comme le débit de gaz inerte qui s'établit dans le vase clos 18 est constant, on peut estimer qu'après un interval de temps prédéterminé l'élimination des substances gazeuses et des vapeurs soit quasi entièrement terminée.

On ouvre alors progressivement la vanne 58 et on ferme parallèlement la vanne 60, jusqu'à ce que le lit statique ou fluidisé soit entretenu entièrement par un débit d'air chaud et asséché produit par le générateur d'air 46. Ce débit d'air chaud asséché remplace le débit de gaz inerte comme gaz de purge et provoque dans le lit statique ou fluidisé 22 une évaporation de l'eau imprègnant éventuellement les particules solides, pour évacuer cette eau en phase vapeur à travers une des conduites 34, 36. Il sera noté que la représentation de deux conduites 34 et 36 indique qu'on a par exemple la possibilité d'évacuer l'air de purge à un autre endroit que le gaz inerte de purge. Au lieu d'utiliser de l'air préchauffé on pourrait naturellement aussi préchauffer le gaz inerte, ce qui est rendu possible par le by-pass 61.

Le degré d'assèchement des résidus solides dans le vase 18 peut être contrôlé en continu, par exemple à l'aide de mesures d'humidité relative et de température effectuées sur le débit d'air à la sortie en 82 et sur le débit d'air à l'entrée en 84. Lorsque les résidus solides sont suffisamment secs pour éviter tout risque d'agglutination des particules solides, la vanne principale de purge 26 et le vanne d'alimentation en gaz de purge 62 sont fermées. La vanne 66 à l'entrée du convoyeur pneumatique et une des vannes 75, 76 ou 77 sont ouvertes. Le générateur d'air 46 débite maintenant dans la conduite 74. Dans le coude de fluidisation 64 il se crée un écoulement des résidus solides fluidisés en direction de la conduite de transport pneumatique 68. Une fluidisation complémentaire de cet écoulement est rendue possible par l'introduction en 70 et en 71 d'air prélevé dans la conduite 74. Une conduite 72, raccordée à la conduite 74, permet de maintenir dans la partie supérieure du vase 18 la pression nécessaire pour assurer l'écoulement des résidus solides dans le coude de fluidisation 64.

Bien entendu on peut aussi injecter de façon préventive un débit de gaz inerte dans la conduite de transport pneumatique 68, lorsqu'un mélange explosif de poussière de combustible et d'air est à craindre dans cette dernière. Ceci est par exemple le cas juste après l'ouverture de la vanne 66 et éventuellement vers la fin de l'opération de vidange du vase 18; c'est-à-dire lorsque la densité de particules solides en suspension dans l'air est encore faible. Après établissement du flux fluidisé de régime dans le convoyeur 68, le risque d'explosion de poussières est cependant réduit, car la proportion de poussières combustibles est beaucoup trop importante par rapport à l'oxygène contenu dans l'air de transport. Dans ce stade du procédé une explosion de poussières dans le convoyeur 68 n'est plus à craindre et le gaz inerte peut être remplacé entièrement par de l'air.

Lorsque le vase 18 est complètement vidangé les vannes d'isolement 66 et 75 ou 76 ou 77 sont fermées. La vanne 26 et au moins une des vannes de purge 38, 40 sont ouvertes. Après décompression on ouvre la vanne 32 pour décharger le contenu de la trémie 29 du filtre 28 à travers la conduite 30 dans le vase 18 et on recommence les opérations comme décrit dans ce qui précède.

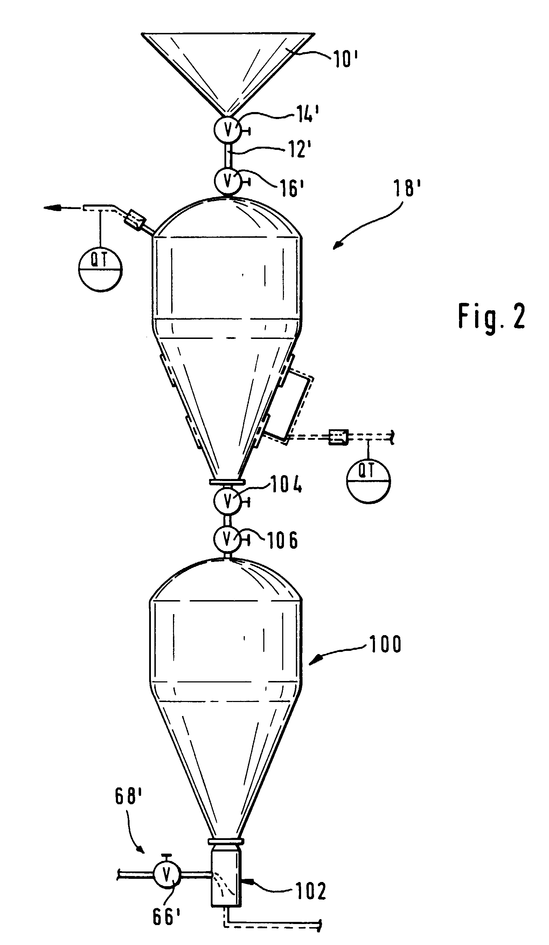

La Figure 2 représente une première variante de réalisation qui permet de faire fonctionner le transport pneumatique 68', sans interruptions dues aux opérations de chargement et de purge du vase clos. Dans cette réalisation le vase clos 18' est équipé de façon analogue au vase 18 de la Figure 1 (tous les équipements ne sont pas représentés sur la Figure 2). La différence entre l'installation de la Figure 1 et l'installation de la Figure 2 se situe essentiellement au niveau de la connexion du vase 18' au convoyeur 68'. Cette connexion ne se fait en effet plus à travers un coude de fluidisation, mais à travers un réservoir tampon 100 qui constitue lui aussi un réservoir de pression. Ce dernier est équipé à sa base d'un dispositif de fluidisation classique qui alimente le convoyeur pneumatique 68'. Les vannes 104 et 106 permettent d'isoler le réservoir tampon 100 du vase 18' lors des opérations de chargement et de purge qui ont lieu dans ce dernier. Il sera noté que pendant la décharge du vase 18' dans le réservoir tampon 100, le fonctionnement du convoyeur 68' ne doit pas être interrompu.

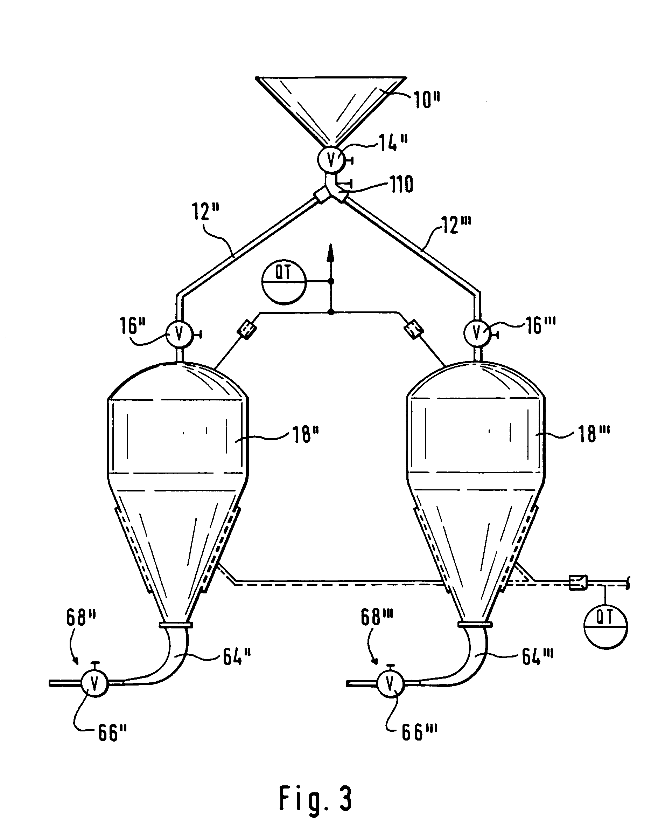

La Figure 3 représente une deuxième variante d'exécution permettant de réaliser une alimentation en continu d'un utilisateur final. Cette variante d'exécution comprend deux vases clos 18'' et 18''' identiques et équipés de la même façon que le vase clos 18 montré sur la Figure 1 (ces équipements ne sont pas montrés sur la Figure 3). Un clapet à trois voies 110 est monté en aval de l'organe d'obturation 14'' et permet d'orienter les résidus solides collectés dans la trémie 10'', soit à travers une conduite 12'' dans le vase clos 18'', soit à travers une conduite 12''' dans le vase clos 18'''. Chacune des conduites 12'' et 12''' est munie de sa propre vanne d'isolement étanche au gaz 16'' et 16'''. Le vase clos 18'' est raccordé à travers un coude de fluidisation 64'', muni d'une vanne d'isolement 66'', à un premier convoyeur pneumatique 68''. Le vase clos 18''' est raccordé à travers un coude de fluidisation 64''', muni d'une vanne d'isolement 66''', à un deuxième convoyeur pneumatique 68''' connecté plus loin au convoyeur 68''. Il sera noté que le vase clos 18'' débitera dans le convoyeur 68'', lorsque dans le convoyeur 18''' auront lieu les opérations de chargement et de purge et vice-versa.

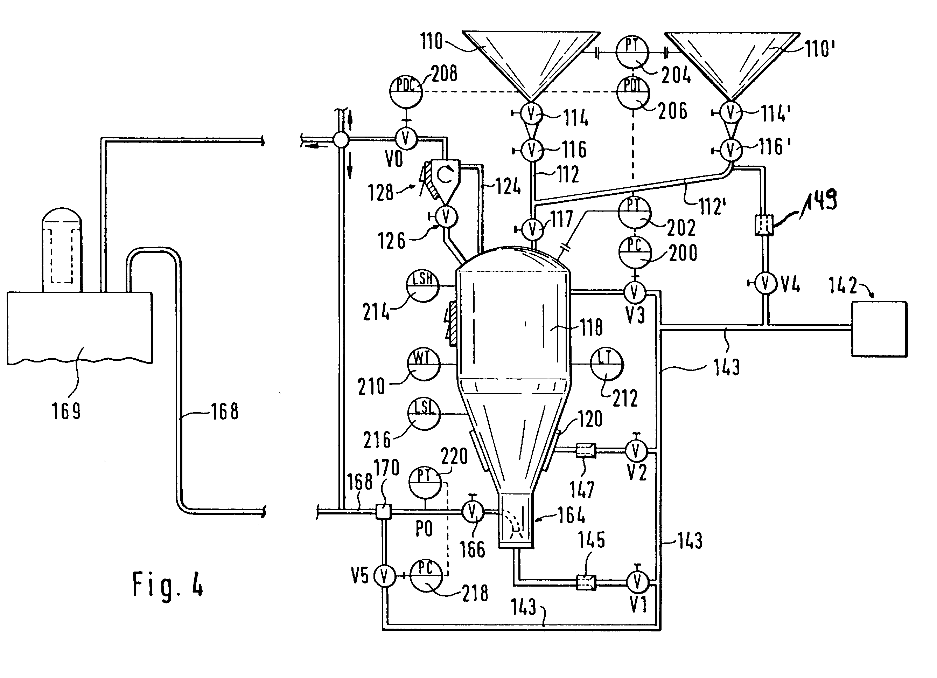

Sur la Figure 4 les références 110 et 110' repèrent deux trémies installées en-dessous d'un séparateur de particules solides d'une installation d'épuration de gaz de haut fourneau. Une conduite de décharge 112, respectivement 112', relie ces deux trémies 110 et 110' à un vase clos 118. Ce dernier est généralement situé à un niveau plus bas que les trémies 110 et 110'. Chacune de ces conduites de décharge 112, 112' est équipée d'un organe d'obturation 114, 114', pour retenir les résidus solides, et d'une vanne d'isolement 116, 116', étanche au gaz pour isoler ledit vase clos 118 par rapport à l'installation d'épuration de gaz.

En ce qui concerne la description du vase clos 118 il est fait référence à la Figure 1. Ainsi, il sera simplement noté que la référence 120 repère un dispositif de fluidisation pour créer un lit statique, respectivement fluidisé dans le vase 118, la référence 124 une conduite de décompression, la référence 128 un séparateur de particules solides équipant la conduite de décompression 124. Il sera aussi noté que dans le cas de la Figure 4 le séparateur de particules solides 128 est un séparateur à cyclone. Une vanne de décompression 126 équipe la conduite de décompression 124 en aval du séparateur de particules solides 128. Ce dernier protège la vanne de décompression 126 contre l'effet abrasif des résidus solides inévitablement entraînés à vitesses élevées dans la conduite de décompression 124 avec les gaz évacués en-dehors du vase clos 118.

Derrière la vanne de décompression 126, les gaz peuvent par exemple être relâchés dans l'atmosphère ou être injectés dans une conduite de transport pneumatique ou un réservoir, à condition que la contre-pression dans ces derniers ne soit pas trop élevée.

Une source d'alimentation en gaz sous pression est repérée par la référence 142. Pour la description détaillée d'une telle source il est également fait référence à la Figure 1. Cette source d'alimentation en gaz sous pression est connectée à une conduite principale de distribution 143.

Une première vanne d'alimentation de gaz V₁, suivie de préférence d'une tuyère de Laval 145, est connectée entre la conduite principale de distribution de gaz 143 et un pot de fluidisation 164, qui est connu en soi et qui forme la partie inférieure du vase clos 118. Une deuxième vanne d'alimentation de gaz V₂, suivie de préférence d'une tuyère de Laval 147, est connectée entre la conduite principale de distribution de gaz 143 et le dispositif de fluidisation 120. Une troisième vanne d'alimentation de gaz V₃ est connectée entre la conduite principale de distribution de gaz 143 et la partie supérieure du vase clos 118. Une quatrième vanne d'alimentation de gaz V₄, suivie de préférence d'une tuyère de Laval 149, est connectée entre la conduite principale de distribution de gaz 143 et la partie amont de la conduite de décharge 112'.

Le pot de fluidisation 164 est raccordé à une conduite de transport pneumatique 168, qui débouche par exemple dans un réservoir 169. Cette conduite de transport pneumatique 168 est munie à proximité immédiate du pot de fluidisation 164 d'une vanne d'isolement 166 étanche aux gaz. Un dispositif d'injection de gaz sous pression 170 est intégré dans la conduite de transport 168 en aval de la vanne d'isolement 166 à proximité immédiate de celle-ci. Le dispositif d'injection de gaz sous pression 170 est raccordé à travers une vanne d'alimentation de gaz V₅ à la conduite principale de distribution de gaz 143.

Le fonctionnement du dispositif décrit dans ce qui précède peut être résumé comme suit.

Avant décharge d'un lot de résidus solides d'une des deux trémies 110, 110' dans le vase clos 118, la vanne de décompression V₀ sur la conduite de décompression 124, les vannes d'alimentation en gaz V₁, V₂, V₃ et V₄ et la vanne d'isolement 166 sur la conduite de transport 168 sont avantageusement fermées. La pression dans le vase clos 118 est le plus souvent inférieure à la pression dans les trémies 110, 110'.

La première opération consiste alors à égaliser sensiblement les pressions entre, d'un côté, les trémies 110 et/ou 110' et, de l'autre côté, le vase clos 118. Cette opération s'effectue par exemple à l'aide de la vanne d'alimentation de gaz V₃, qui est asservie à cet effet à un régulateur de pression 200. Ce dernier reçoit comme signaux d'entrée la pression dans le vase clos 118 (qui est mesurée par un capteur de pression 202) et les pressions dans les trémies 110 et/ou 110' (qui sont mesurées par un capteur de pression 204); respectivement la différence entre les pressions mesurées dans le vase clos 118, d'un côté, et les trémies 110 et/ou 110', de l'autre côté. Ce signal de pression différentiel est par exemple fourni directement par l'unité 206.

La deuxième opération consiste à ouvrir les vannes 114, 116 et 117, respectivement 114', 116' et 117, afin d'ouvrir la conduite de décharge 112, respectivement 112'. Les résidus solides peuvent maintenant s'écouler par gravité de la trémie 110 dans la vase clos 118. Dans le cas de la trémie 110', qui est par exemple plus éloignée du vase clos 118, on ouvre avantageusement la vanne d'alimentation de gaz V₄ pour injecter un gaz de propulsion dans la conduite de décharge 112'. Ceci sera surtout le cas si la distance entre la trémie 110' et le vase clos 118 est plus importante et/ou si la hauteur disponible pour un écoulement par gravité des résidus solides dans la conduite 112' est faible.

Pendant la décharge des résidus solides dans le vase clos 118, la pression dans ce dernier augmente nécessairement. La décompression du vase clos 118 est gouvernée par la vanne de décompression V₀, qui est asservie à un régulateur de pression 208, recevant comme signal d'entrée la différence de pression entre les trémies 110, 110' d'un côté et le vase clos 118 de l'autre côté. Si cette différence de pression devient trop faible, ou si la pression dans le vase clos 118 devient même supérieure à la pression régnant dans les trémies 110, 110', la vanne V₀ est ouverte davantage, permettant une décompression du vase clos 118 à travers la conduite de purge 124.

Le degré de remplissage du vase clos 118 est surveillé par un capteur de poids 210 et/ou d'un capteur de niveau continu 212 et/ou un capteur de niveau haut 214. Si un niveau de remplissage haut du vase clos 118 est atteint, ce dernier est isolé par rapport aux trémies 110, 110' par fermeture des vannes 114, 116 et 117, respectivement 114', 116' et 117', terminant ainsi l'opération de déchargement.

Peut suivre maintenant une opération de purge du lot de résidus solides déchargé dans le vase clos 118. Cette opération est réalisée en ouvrant la vanne d'alimentation de gaz V₂ et en injectant le ou les gaz de purge par l'intermédiaire du dispositif de fluidisation 120 à travers les résidus solides. On crée ainsi un lit statique et/ou fluidisé dans le vase clos 118. Le régulateur de pression 208 de la vanne de décompression V₀ tolère maintenant, de façon avantageuse, un accroissement de la pression dans le vase clos 118 à une valeur supérieure à la pression régnant dans les trémies 110 et/ou 110'. On a en effet constaté que l'efficacité de l'opération de purge augmente si la pression augmente.

L'opération de purge étant terminée, la vanne de décompression V₀ est fermée. La vanne d'alimentation de gaz V₁ est ouverte, pour injecter un gaz de fluidisation dans le pot de fluidisation 164; puis la vanne d'isolement 166 sur la conduite de transport 168 est ouverte, pour faire communiquer le pot de fluidisation 164 avec la conduite de transport 168. A l'aide de la vanne de réglage V₃ on peut maintenant augmenter la pression au-dessus des résidus solides dans le vase clos 118, ce qui permet d'évacuer les résidus solides fluidisés du pot de fluidisation 164 dans la conduite de transport pneumatique 168.

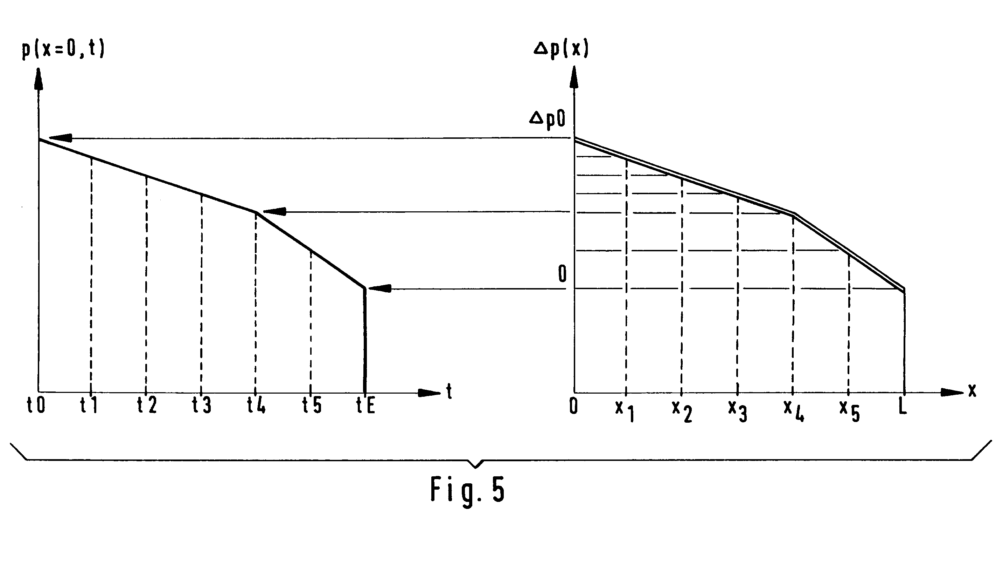

Lorsque le niveau des résidus solides dans le vase clos 118 descend, la vanne d'alimentation de gaz V₃ maintient la pression au-dessus des résidus solides sensiblement constante, jusqu'au moment où un détecteur de niveau 216 détecte l'atteinte d'un niveau bas des résidus solides dans le vase clos 118. Ce niveau bas est choisi de façon à éviter la création d'un court-circuit des gaz à travers la masse des résidus solides. Maintenant les vannes d'alimentation de gaz V₁, V₂ et V₃ et la vanne d'isolement 166 sur la conduite de transport 168 sont fermées. En même temps la vanne d'alimentation de gaz V₅, qui est intégrée dans un système asservi comprenant un régulateur de pression 218 et un capteur de pression 220, commence à régler la pression au point P₀ qui est situé directement en amont de la vanne d'isolement 166. A cet effet le régulateur 218 suit, en réglant la pression au point P0, une courbe de pression décroissante dans le temps lors de l'opération de vidange du conduit de transport 168. Une telle courbe de réglage p(t) au point P₀ est représentée, exclusivement à titre d'illustration, sur le diagramme de gauche de la Figure 5.

Plus la conduite de transport 168 se vide, plus la perte de charge à compenser diminue. Ce phénomène est représenté sur le diagramme de droite de la Figure 5. En abscisse est représentée la longueur de la conduite de transport 168. L'abscisse X=0 représente l'emplacement du point P₀. En ordonnée sont représentées les pertes de charge entre l'embouchure L et les différents points Xᵢ de la conduite. Ces pertes de charge sont calculées pour une vitesse maximale admissible dans la section la plus défavorisée de la conduite de transport 168. En d'autres termes, cette vitesse est choisie de façon que la conduite de transport 168 ne subisse pas de phénomènes d'abrasion intolérables dans cette section la plus défavorisée.

Le diagramme de gauche est sensiblement identique au diagramme de droite, à l'exception qu'en abscisse sont représentés maintenant les temps tᵢ auxquels le front arrière des résidus solides dans la conduite de transport 168 passe aux différents endroits Xᵢ de la conduite de transport 168, et en ordonnée est représentée la pression p(t) qu'il faut avoir au point P₀ pour obtenir la vitesse maximale admissible dans la conduite de transport 168. En d'autres termes, si on impose au régulateur 218 de suivre la courbe représentée dans le diagramme de gauche de la Figure 5 pendant la vidange de la conduite 168, on arrive à réaliser la vidange complet de celle-ci dans un temps raisonnable sans risquer d'avoir pendant la phase finale des vitesses très élevées entraînant une usure rapide de la conduite.

Il est précisé que l'allure de la courbe p(t) devra être déterminée pour chaque installation individuellement. La courbe représentée dans la Figure 5 n'est bien entendu qu'un exemple théorique pour fixer les idées et ne représente pas une courbe caractéristique d'une installation réelle.

Enfin, la décompression du vase clos 118 se fait d'une façon contrôlée à travers la conduite de purge 124, c'est-à-dire à débit contrôlé. Il est bien entendu possible d'interrompre la décompression lorsqu'on a atteint dans le vase clos 118 la pression régnant dans les trémies 110 et/ou 110'. Cette façon de procéder réduit naturellement le débit de gaz qu'on doit injecter dans le vase clos 118 pour pressuriser, avant l'ouverture des conduites de décharge 112 et/ou 112', le vase clos 118.

## Revendications

1. Procédé pour l'évacuation de résidus solides, granuleux ou pulvérulents, d'une installation d'épuration de gaz (10), notamment de gaz de haut-fourneau, dans lequel un lot de résidus solides est déchargé de l'installation d'épuration de gaz à travers une conduite de décharge (12) dans au moins un premier vase clos (18), et lorsque l'opération de déchargement est terminée, ledit premier vase clos (18) est isolé par rapport à l'installation d'épuration de gaz (10) par fermeture étanche de ladite conduite de décharge,
**caractérisé par**
un passage d'au moins un gaz de purge sous pression à travers lesdits résidus solides contenus dans ledit premier vase clos (18), de façon à créer un lit statique, respectivement fluidisé (22), desdits résidus solides dans ledit premier vase clos (18),
une évacuation contrôlée de ce (ces) gaz de purge en dehors dudit premier vase clos, et finalement
une évacuation progressive des résidus solides en dehors dudit premier vase clos (18) dans une conduite de transport (68), suivie d'un transport des résidus solides à travers cette conduite de transport en suspension dans un gaz sous pression.

2. Procédé selon la revendication 1, caractérisé en ce que l'on crée avec le (les) gaz de purge une surpression dans le premier vase clos (18).

3. Procédé selon la revendication 2, caractérisé en ce qu'un premier gaz de purge est constitué d'un gaz inerte.

4. Procédé selon l'une quelconque des revendications 1 à 3, caractérisé en ce qu'au moins un gaz de purge est un gaz réchauffé ayant une humidité relative très faible.

5. Procédé selon la revendication 4, caractérisé en ce que ledit gaz réchauffé est de l'air préalablement asséché.

6. Procédé selon l'une quelconque des revendications 1 à 5, caractérisé en ce que le débit de gaz de purge est maintenu constant.

7. Procédé selon l'une quelconque des revendications 1 à 6, caractérisé en ce que le ou les gaz de purge sont évacués à travers des séparateurs particules solides (28).

8. Procédé selon l'une quelconque des revendications 1 à 7, caractérisé en ce qu'après le passage du ou des gaz de purge, les résidus solides sont évacués dans au moins un deuxième vase clos (100), en ce que ce deuxième vase clos (100) est ensuite isolé par rapport au premier vase clos (18'), et en ce que lesdits résidus solides sont évacués en continu du deuxième vase clos (100) dans ladite conduite de transport (68') dans laquelle ils sont transportés en suspension dans un gaz sous pression.

9. Procédé selon l'une quelconque des revendications 1 à 7, caractérisé en ce que le déchargement desdits résidus solides se fait alternativement dans au moins deux vases clos (18'' et 18''') montés en parallèle, et en ce que le premier vase clos (18'') est chargé respectivement purgé, lorsque dans le deuxième vase clos (18''') lesdits résidus solides sont évacués par transport pneumatique (68''') et vice-versa.

10. Procédé selon l'une quelconque des revendications 1 à 9 caractérisé par un réglage de la pression régnant dans ledit premier vase clos (118), avant de commencer le déchargement du lot de résidus solides dans ledit premier vase clos (118) et pendant son déchargement proprement dit, de façon à limiter la différence de pression entre l'installation d'épuration de gaz et ledit premier vase clos (118).

11. Procédé selon la revendication 10 caractérisé par
a) une injection contrôlée d'un gaz sous pression dans ledit premier vase clos avant de commencer le déchargement du lot de résidus solides dans ledit premier vase clos, de façon à établir dans celui-ci une pression sensiblement égale à la pression régnant dans l'installation d'épuration de gaz;
b) une décompression contrôlée dudit premier vase clos (118) par une évacuation contrôlée d'un débit de gaz en-dehors de celui-ci pendant l'opération de déchargement proprement dite, de façon à maintenir dans ledit premier vase clos (118) une pression légèrement inférieure à la pression régnant dans l'installation d'épuration de gaz.

12. Procédé selon la revendication 10 ou 11 caractérisé par
a) une détection d'un niveau de remplissage minimal dudit premier vase clos (118), lors de l'évacuation progressive du lot de résidus solides en-dehors dudit premier vase clos (118) dans ladite conduite de transport (168);
b) une interruption de l'évacuation du lot de résidus solides en-dehors dudit premier vase clos (118) et un isolement, du point de vue pressions, de ladite conduite de transport (168) par rapport audit premier vase clos (118), si ce niveau de remplissage minimal est détecté; et
c) un réglage de la pression dans la partie amont de ladite conduite de transport (168) par injection d'un gaz sous pression, de façon à suivre une courbe de pression décroissante dans le temps lors d'une évacuation progressive des résidus solides en dehors de ladite conduite de transport (168) en suspension dans le gaz sous pression.

## Claims

1. Method for removing granular or pulverulent solid residues from a gas purification installation (10), especially blast furnace gases, wherein a batch of solid residues is discharged from the gas purification installation through a discharge pipe (12) into at least a first closed vessel (18), and when the discharge operation is finished, the said first closed vessel (18) is isolated with respect to the gas purification installation (10) by leak-tight closure of the said discharge pipe,
**characterized by**
passing at least one pressurized purge gas through the said solid residues contained in the said first closed vessel (18), so as to create a static or fluidized bed (22) for the said solid residues in the said first closed vessel (18),
controlled removal of this (these) purge gas (gases) from the said first closed vessel, and finally
progressive removal of the solid residues from the said first closed vessel (18) into a transport pipe (68), followed by transport of the solid residues through this transport pipe in suspension in a pressurized gas.

2. Method according to Claim 1, characterized in that an overpressure is created with the purge gas (gases) in the first closed vessel (18).

3. Method according to Claim 2, characterized in that a first purge gas consists of an inert gas.

4. Method according to any one of Claims 1 to 3, characterized in that at least one purge gas is a heated gas having a very low relative humidity.

5. Method according to Claim 4, characterized in that the said heated gas is previously dried air.

6. Method according to any one of Claims 1 to 5, characterized in that the flow rate of purge gas is kept constant.

7. Method according to any one of Claims 1 to 6, characterized in that the purge gas or gases are removed through solid particle separators (28).

8. Method according to any one of Claims 1 to 7, characterized in that, after passage of the purge gas or gases, the solid residues are removed into at least one second closed vessel (100), in that this second closed vessel (100) is then isolated with respect to the first closed vessel (18'), and in that the said solid residues are continuously removed from the second closed vessel (100) into the said transport pipe (68') in which they are transported in suspension in a pressurized gas.

9. Method according to any one of Claims 1 to 7, characterized in that the discharge of the said solid residues is performed alternately into at least two closed vessels (18" and 18"') mounted in parallel, and in that the first closed vessel (18") is charged or purged, when the said solid residues are removed by pneumatic transport (68"') from the second closed vessel (18"'), and vice versa.

10. Method according to any one of Claims 1 to 9, characterized by adjustment of the pressure prevailing in the said first closed vessel (118), before starting the discharge of the batch of solid residues into the said first closed vessel (118) and during its discharge proper, so as to limit the pressure difference between the gas purification installation and the said first closed vessel (118).

11. Method according to Claim 10, characterized by
a) controlled injection of pressurized gas into the said first closed vessel before starting the discharge of the batch of solid residues into the said first closed vessel, so as to establish therein a pressure substantially equal to the pressure prevailing in the gas purification installation;
b) controlled decompression of the said first closed vessel (118) by controlled removal of a flow rate of gas out of the latter during the discharge operation proper, so as to maintain in the said first closed vessel (118) a pressure slightly lower than the pressure prevailing in the gas purification installation.

12. Method according to Claim 10 or 11, characterized by
a) detection of a minimum filling level of the first closed vessel (118), during the progressive removal of the batch of solid residues from the said first closed vessel (118) into the said transport pipe (168);
b) interruption of the removal of the batch of solid residues from the said first closed vessel (118) and isolation, with regard to pressure, of the said transport pipe (168) with respect to the first closed vessel (118), if this minimum filling level is detected; and
c) adjustment of the pressure in the upstream part of the said transport pipe (168) by injection of a pressurized gas, so as to follow a pressure curve which decreases with time during progressive removal of the solid residues from the said transport pipe (168) in suspension in the pressurized gas.

## Patentansprüche

1. Verfahren zur Evakuierung körniger oder staubförmiger fester Abfälle aus einer Gasreinigungsvorrichtung (10), vor allem für Gichtgas, bei dem eine Ladung fester Abfälle durch eine Ablaßleitung (12) aus der Gasreinigungsvorrichtung in mindestens ein erstes geschlossenes Gefäß (18) entleert wird, und bei dem nach Beendigung des Entleerungsvorganges das geschlossene Gefäß (18) von der Gasreinigungsvorrichtung (10) durch dichten Verschluß der Ablaßleitung getrennt wird,
**gekennzeichnet durch**
ein Durchströmen von mindestens einem unter Druck stehendem Reinigungsgas durch die in dem ersten geschlossenen Gefäß (18) enthaltenen festen Abfälle, so daß aus den in dem ersten geschlossenen Gefäß befindlichen festen Abfällen ein statisches bzw. Wirbelbett (22) geschaffen wird,
eine kontrollierte Evakuierung dieses Reinigungsgases (dieser Reinigungsgase) aus dem ersten geschlossenen Gefäß, und schließlich
eine fortschreitende Evakuierung der festen Abfälle aus dem ersten geschlossenen Gefäß in eine Transportleitung (68), gefolgt von einem Transport der in einem unter Druck stehenden Gas in Suspension befindlichen, festen Abfälle durch diese Transportleitung.

2. Verfahren nach Anspruch 1, dadurch gekennzeichnet, daß man mittels des Reinigungsgases (der Reinigungsgase) in dem ersten geschlossenen Gefäß (18) einen Überdruck schafft.

3. Verfahren nach Anspruch 2, dadurch gekennzeichnet, daß ein erstes Reinigungsgas aus einem Inertgas besteht.

4. Verfahren nach einem der Ansprüche 1 bis 3, dadurch gekennzeichnet, daß mindestens ein Reinigungsgas ein erhitztes Gas mit sehr geringer relativer Feuchtigkeit ist.

5. Verfahren nach Anspruch 4, dadurch gekennzeichnet, daß das erhitzte Gas aus vorgetrockneter Luft besteht.

6. Verfahren nach einem der Ansprüche 1 bis 5, dadurch gekennzeichnet, daß der Durchsatz des Reinigungsgases konstant gehalten wird.

7. Verfahren nach einem der Ansprüche 1 bis 6, dadurch gekennzeichnet, daß das Reinigungsgas oder die Reinigungsgase über Staubabscheider (28) evakuiert werden.

8. Verfahren nach einem der Ansprüche 1 bis 7, dadurch gekennzeichnet, daß nach dem Durchströmen des Reinigungsgases oder der Reinigungsgase die festen Abfälle in mindestens ein zweites geschlossenes Gefäß (100) evakuiert werden, daß dieses zweite geschlossene Gefäß (100) anschließend vom ersten geschlossenen Gefäß (18') getrennt wird und daß die festen Abfälle stetig aus dem zweiten geschlossenen Gefäß (100) in die Transportleitung (68') evakuiert werden, in der sie, in einem unter Druck stehenden Gas in Suspension befindlich, befördert werden.

9. Verfahren nach einem der Ansprüche 1 bis 7, dadurch gekennzeichnet, daß die Entleerung der festen Abfälle abwechselnd in mindestens zwei, parallel angebrachte geschlossene Gefäße (18" und 18"') erfolgt und daß das erste geschlossene Gefäß (18") beschickt bzw. gereinigt wird, wenn im zweiten geschlossenen Gefäß (18"') die festen Abfälle durch Druckluftförderung (68"') evakuiert werden und umgekehrt.

10. Verfahren nach einem der Ansprüche 1 bis 9, gekennzeichnet durch eine Steuerung des in dem ersten geschlossenen Gefäß (118) herrschenden Drucks vor Beginn der Entleerung der Ladung fester Abfälle in das erste geschlossene Gefäß (118) und während ihrer Entleerung an sich, so daß die Druckdifferenz zwischen der Gasreinigungsvorrichtung und dem ersten geschlossenen Gefäß (118) begrenzt wird.

11. Verfahren nach Anspruch 10, gekennzeichnet durch
a) ein kontrolliertes Einblasen eines unter Druck stehenden Gases in das erste geschlossene Gefäß vor Beginn der Entleerung der Ladung fester Abfälle in das erste geschlossene Gefäß, so daß in diesem ein Druck aufgebaut wird, der dem in der Gasreinigungsvorrichtung herrschenden Druck deutlich gleicht;
b) eine kontrollierte Dekompression des ersten geschlossenen Gefäßes (118) durch eine kontrollierte Evakuierung eines Gasdurchsatzes aus diesem während des Entleerungsvorganges an sich, so daß in dem ersten geschlossenen Gefäß (118) ein Druck aufrecht erhalten wird, der leicht geringer ist, als der in der Gasreinigungsvorrichtung herrschende Druck.

12. Verfahren nach Anspruch 10 oder 11, gekennzeichnet durch
a) eine Messung eines Mindestfüllstandes des ersten geschlossenen Gefäßes (118) bei der fortschreitenden Evakuierung der Ladung fester Abfälle aus dem ersten geschlossenen Gefäß (118) in die Transportleitung (168);
b) eine Unterbrechung der Evakuierung der Ladung fester Abfälle aus dem ersten geschlossenen Gefäß (118) sowie eine Trennung der Transportleitung (168) von dem ersten geschlossenen Gefäß (118) hinsichtlich der Drücke, sobald dieser Mindestfüllstand gemessen wird; und
c) eine Steuerung des Drucks im oberen Teil der Transportleitung (168) durch Einblasen eines unter Druck stehenden Gases, so daß eine zeitlich abnehmende Druckkurve verfogt wird, bei einer fortschreitenden Evakuierung der in einem unter Druck stehenden Gas in Suspension befindlichen, festen Abfälle aus der Transportleitung (168).
